# EUROPEAN PATENT APPLICATION

(11) **EP 1 134 062 A1**
(43) Date of publication of application: **19.09.2001**
(21) Application number: 01105710.6
(22) Date of filing: 07.03.2001
(51) Int. Cl.: B29C 33/16

(54) **Insert device for use in a mold**

(30) Priority: 07.03.2000 US 520155
(71) Applicant: WOODBRIDGE FOAM CORPORATION, Mississauga, Ontario L4Z 2G6 (CA)
(72) Inventor: Oborny, Louis F., Aurora, Illinois, 60542 (US); Tran, James C., Lenexa, Kansas 66215 (US); Wowk, Peter, Mississauga, Ontario, CA L6V 2B4 (CA)
(74) Representative: Dr. Weitzel & Partner

(57) **Abstract**

An insert device for use in a mold comprising: (i) a first substrate material; and (ii) a magnetically attractable matrix material secured with respect to the substrate material. A system for using the insert device in a mold is also described. The insert device is particularly useful in the production of foam parts.

## Description

### BACKGROUND OF THE INVENTION

### FIELD OF THE INVENTION

In one of its aspects, the present invention relates to an insert device for use in a mold. In another of its aspects, the present invention relates to a system for positioning an insert device in a mold.

### BRIEF DESCRIPTION OF THE PRIOR ART

Many articles are manufactured by placing a raw material into a cavity in a mold wherein the raw material undergoes a physical change (e.g. it expands or foams) and the article produced thus acquires the shape of the cavity. In particular, this technique is commonly employed for producing foamed articles made from polymeric foams such as polyurethane foam, latex (e.g. natural and styrene-butadiene rubber) foam and the like.

For example, automotive seats are commonly manufactured from polyurethane cushions which are molded to shape and then covered with a vinyl, cloth or leather finish cover. Polyurethane foams are somewhat unique in that foaming and at least a portion of the polymerization process occur simultaneously. Thus, in the production of polyurethane foam using, for example, a conventional cold foam technique, a typical formulation comprises:
1. Polyol
2. Water
3. Tetramethyl ethane diamine
4. Dimethyl ethanol amine
5. Polyisocyanate

The mixture is dispensed into a mold using a suitable mixing head, after which the mold is then closed to permit the expanding mass within it to be molded. Accordingly, it is convenient generally to refer to the mixture initially dispensed into the mold as "a liquid foamable polymeric composition" or, in this case, "a liquid foamable polyurethane composition". As the composition expands in the mold, polymerization occurs and the polymer so formed becomes solidified.

When molding a liquid foamable polymeric composition to form articles such as polyurethane foam articles, it is conventional to use a clam-shell mold comprising a bottom mold and a top mold which, when closed, define a mold cavity. The mold is opened, the liquid foamable polyurethane composition is dispensed into the mold cavity and the mold is closed as a chemical reaction causes the composition to expand. After the mold is closed, the composition expands to fill the interior cavity of the mold. Alternatively, the composition may be dispersed into a closed mold. In either case, as the polymerization reaction is completed, the foam cures and permanently assumes the shape of the mold cavity.

In the production of polyurethane foam articles as described above, particularly such articles used in automotive applications, it is conventional to dispose so-called "insert devices" into the mold prior to production of the foam part. Thus, after production of the foam part, the insert device is molded into and/or adhered to the foam product.

Such insert devices are used for anumber of purposes. For example, the insert device can be used for anti-squeak, hardness (Indentation Force Deflection), ball rebound, surface air flow and/or tear strength properties. Further, the "insert device" could be a trim cover for application to a surface of the foam product.

Conventionally, the insert device has been disposed in the mold prior to production of the foam part by mechanical means. For example, if the insert device is a cloth attachment to be molded into the foam part, it is common to modify the upper mold section (also known as the lid) of the mold to include "Christmas tree" type protrusions which pierce the cloth attachment as it is forced thereover. This approach is disadvantageous for a number of reasons. First, a two handed operation is required to make each individual piercing on the cloth attachment. This leads to an increase in the time needed to prepare the mold for use which means that the production line must be operated more slowly and/or additional labour will be required to accommodate disposition of the insert device in the mold. Second, given the nature of piercing the cloth material as described, there is an increase in the occupational health risk associated with disposing the insert device in the mold. Third, the foam part is susceptible to ripping or tearing when it is released from the "Christmas tree" type protrusions. Fourth, since it is conventional to minimize the number of protrusions used, there is an increased likelihood that the insert device (particularly sheet-like insert devices) will sag leading to foam intrusion between the insert device the adjacent mold surface.

Given these disadvantages, it would be useful to have an improved insert device which could be correctly positioned in the mold more reliably, more quickly and more safely.

### SUMMARY OF THE INVENTION

It is an object of the present invention to provide a novel insert device for use in a mold which obviates or mitigates one or more of the above-identified disadvantages of the prior art.

It is another object of the present invention to provide a novel system for positioning an insert device in a mold which obviates or mitigates at least one of the above-identified disadvantages of the prior art.

Accordingly, in one of its aspects, the present invention provides an insert device for use in a mold comprising:
(i) a first substrate material; and
(ii) a magnetically attractable matrix material secured with respect to the first substrate material.

In another of its aspects, the present invention provides a system for positioning an insert device in a mold , the system comprising mold:
a mold comprising an upper mold section and a lower mold section;
an insert device comprising: (i) a first substrate material; and (ii) a magnetically attractable matrix material secured with respect to the substrate material;
at least one magnet located in at least one of the first upper mold section and the lower mold section;
an insert locating device disposed in same mold section as the at least one magnet, such that, when the insert device and the insert locating device are in contact, the magnetically attractable matrix material and the magnet are in magnetic contact.

A number of advantages accrue from the present invention. First, prior art two handed operation to position the insert devince in the mold is obviated or mitigated. This leads to a reduction in the time needed to prepare the mold for use which means that the production line may be operated more efficiently. Second, the occupational health risk associated with the prior art system for securing the insert device is obviated or mitigated. Third, ripping or tearing of the foam part product is obviated or mitigated. Fourth, sagging of sheet-like insert devices is obviated or mitigated thereby minimizing the occurrence of foam intrusion between the insert device the adjacent mold surface. Other advantages will be apparent to those of skill in the art.

### BRIEF DESCRIPTION OF THE DRAWINGS

Embodiments of the present invention will be described with reference to the accompanying drawings wherein like numerals designate like parts and in which:
Figure 1 illustrates a specific embodiment of the present insert device; and
Figure 2 illustrates an enlargement of area A in Figure 1.

### DETAILED DESCRIPTION OF THE PREFERRED EMBODIMENTS

The present insert device comprises a first substrate material and a magnetically attractable matrix material secured with respect to the first substrate material.

The nature of the first substrate material is not particularly restricted and will depend in large part on the purpose being served by the insert device in the finished foam part. Thus, the first substrate material, in a non-limiting embodiment, may be a cloth or fabric material which is used for reinforcement, anti-squeak, hardness, density differentiation and the like. Further, the insert device may be in the form of a heating element, a duct and the like. The selection of the material to achieve a desired property is well within the purview of a person of ordinary skill in the art.

Preferably, the first substrate material is a trim cover normally used to cover the "A-surface" of a foam seat component or other vehicular interior trim parts.

Preferably, the substrate material is a non-magnetic sheet material such as a polymeric sheet material or a felt material.

The second component of the present insert device is a magnetically attractable matrix material. Preferably, the matrix material comprises a second substrate material impregnated with a metal-containing composition.

The nature of the second substrate material is not particularly restricted and it may be similar in design to the first substrate material.

In some cases, the second substrate material may be a sheet-like material.

The choice of sheet-like material used herein is not particularly restricted provided that it has or is capable of having a matrix design as described in the speficiation. Thus, the sheet-like material may be a non-metal or a metal. Preferably, the sheet-like material is flexible. The sheet-like material may be fibrous or non-fibrous. Non-limiting examples of fibrous sheet-like materials include at least one member selected from the group consisting essentially of glass fibres (e.g., in the form of a cloth or a mat, chopped or unchopped, such as Nico™ 754 1 oz/ft²), polyester fibres, polyolefin fibres (e.g., polyethylene and polypropylene), Kevlar™ fibres, polyamides fibres (e.g., nylon), cellulose fibres (e.g., burlap), carbon fibres, cloth materials such spun bound polyesters (e.g., Lutravil™ 1DH7210B/LDVT222 and Freudenberg™ PTLD585G/PTLD600B) and paper (e.g., Kraft™ #60). It will be appreciated that the fibrous sheet-like material may be woven or non-woven. Non-limiting examples of a non-fibrous sheet-like material comprise at least one member selected from the group consisting of thermosets (e.g., polyurethanes, polyesters and epoxies), metals such as aluminum foil, polycarbonates (e.g., Lexan™ and Dow Calibre™), polycarbonate/ABS alloys (e.g., Dow Pulse™), ABS terpolymers (e.g., Royalite™ 59 and Dow Magnum™), polyester terphthalate (PET), vinyl, styrene maleic anhydride (e.g., Arco Dylark™) and fibreglass reinforced polypropylene (e.g., Azdel™). It will be appreciated that many non-fibrous sheet-like materials may themselves be reinforced with fibrous materials and thus, the sheet-like material may be a combination of fibrous and non-fibrous materials, either mixed or composite in construction.

Impregnation of the second substrate material with a metal-containing composition can be achieved in a conventional manner.

By use of the term "matrix material", it is meant that the material is porous in design meaning that the metal-containing composition can be dispersed throughout the substrate material. In one preferred embodiment, the substrate material is a fabric. In another preferred embodiment, the substrate material is a cloth. In yet a further preferred embodiment, the substrate material is a cellular material.

Preferably, the magnetically attractable matrix material is in the form of one of more "patches" with each patch having the design described above. These patches may then be adhered, sewn or otherwise secured to the first substrate material in a conventional manner.

Thus, the first substrate material, in a preferred embodiment may be considered to be a sheet-like material having a relatively large surface area to which is affixed at least one magnetically attractable matrix material having a relatively small surface area. The present inventors have discovered that for a given substrate material such as a cloth insert, the number of magnetically attractable patches required is less than the number of mechanical "Christmas tree" piercings that would be required to hold a similar cloth attachment.

To use the present insert device in the production of a molded foam part, it is preferred to design the mold such that the surface thereof on which the insert device is disposed includes an insert locating device which is designed to receive in abutting contact and edge of the insert device. The edge of the insert device in abutting contact with the insert locating device provides a visual indicator to the user that the insert device is properly aligned with respect to the surface of the mold in question.

The surface of the mold in question is also designed to include at least one magnet which is located to be in close proximity to the magnetically attractable matrix material when the insert device is correctly positioned in the mold. The specific design of the insert locating device is variable and will depend on the nature of the device - this is within the purview of a person of ordinary skill in the art.

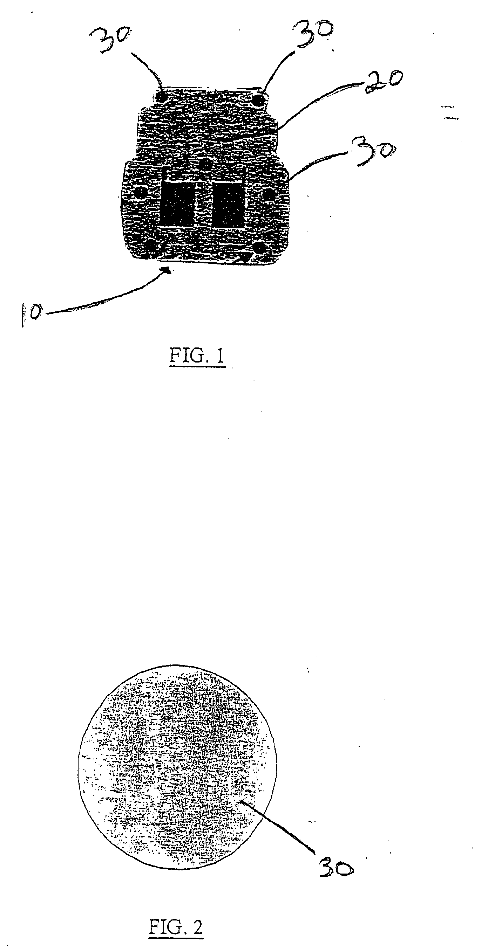

With reference to Figure 1, a preferred insert device 10 is shown which comprises a cloth layer 20 at the first substrate material and 7 magnetically attractable patches 30 adhered to cloth layer 20.

A mold (not shown) would be provided to receive insert device 10. Preferably, the surface of the mold would be designed to include a ridge or other abutment surface for contact with one of the major surfaces of insert device 10 to signify to the user that insert device 10 is in the correct location in the mold. The mold would also be designed to include 7 magnets corresponding to the location of magnets 30 on cloth layer 20 shown in the Figure. Thus the combination of the locator device in the mold and the predetermined location of the magnets and magnetically attractable patches 20 serves to secure insert device 10 to the mold surface in a fast, reliable and safe manner. Further, the use of magnetically attractable patches 20 results in insert device 10 substantially "hugging" the surface of the mold (not shown) against which insert device 10 is secured.

Other variations and modifications of the specific embodiments described hereinabove which do not depart from the scope and spirit of the invention will be immediately apparent to those of skill in the art having this specification in hand. For example, while a specific number, shape and orientation of magnetically attractable patches has been described with reference to the Figures, those of skill in the art will immediately recognize that one or more of these features may be modified to achieve the advantages of the present invention. Further, while a specific number, shape and orientation of magnets in the mold has been described with reference to the Figures, those of skill in the art will immediately recognize that one or more of these features may be modified to achieve the advantages of the present invention. Additional variations and modifications will be apparent to those of skill in the art.

## Claims

1. An insert device for use in a mold comprising:
(i) a first substrate material; and
(ii) a magnetically attractable matrix material secured with respect to the substrate material.

2. The insert device defined in claim 1, wherein the first substrate material comprises a trim cover.

3. The insert device defined in claim 1, wherein the first substrate material comprises a non-magnetic sheet material.

4. The insert device defined in claim 3, wherein the non-magnetic sheet material comprises a polymeric sheet material.

5. The insert device defined in claim 3, wherein the non-magnetic sheet material comprises a felt material.

6. The insert device defined in claim 3, wherein the non-magnetic sheet material comprises a substantially porous material.

7. The insert device defined in claim 3, wherein the non-magnetic sheet material comprises a substantially non-porous material.

8. The insert device defined any one of claims 1-7, wherein the magnetically attractable matrix material comprises a second substrate material impregnated with a metal.

9. The insert device defined in claim 8, wherein the metal comprises iron.

10. The insert device defined in any one of claims 1-9, wherein the first substrate material comprises a first planar surface having a first surface area and the magnetically attractable matrix material comprises a second planar surface having a second surface area, the second surface area being less than the first surface area.

11. The insert device defined in claim 10, wherein the magnetically attractable matrix material comprises a plurality of magnetically attractable patches secured to various portions of the first substrate material.

12. A system for positioning an insert device in a mold, the system comprising mold:
a mold comprising an upper mold section and a lower mold section;
an insert device comprising: (i) a first substrate material; and (ii) a magnetically attractable matrix material secured with respect to the substrate material;
at least one magnet located in at least one of the first upper mold section and the lower mold section;
an insert locating device disposed in same mold section as the at least one magnet, such that, when the insert device and the insert locating device are in contact, the magnetically attractable matrix material and the magnet are in magnetic contact.

13. The system defined in claim 12, wherein the at least one magnet and the insert locating device are disposed in the upper mold section of the mold.

14. The system defined in claim 12, wherein the at least one magnet and the insert locating device are disposed in the lower mold section of the mold.

15. The system defined in claim 12, wherein a plurality of magnets are disposed in the mold.

16. The system defined in any one of claims 12-15, wherein the magnetically attractable matrix material comprises a plurality of magnetically attractable patches secured to various portions of the first substrate material.

17. The system defined in any one of claims 12-16, wherein a plurality of magnets are disposed in the mold and the magnetically attractable matrix material comprises a plurality of magnetically attractable patches secured to various portions of the first substrate material.

18. The system defined in claim 17, wherein the number of magnets and the number of patches is substantially the same.
